# EUROPÄISCHE PATENTSCHRIFT

(11) **EP 2 752 375 B1**
(45) Veröffentlichungstag und Bekanntmachung des Hinweises auf die Patenterteilung: **07.09.2016**
(21) Anmeldenummer: 14150174.2
(22) Anmeldetag: 03.01.2014
(51) Int. Cl.: B65D 85/804, A47J 31/06

(54) **VORRICHTUNG ZUR ZUBEREITUNG EINES AUFGUSSGETRÄNKS**
DEVICE FOR PREPARING AN INFUSED BEVERAGE
DISPOSITIF DE PRÉPARATION D'UNE INFUSION

(30) Priorität: 07.01.2013 DE 102013200114
(43) Veröffentlichungstag der Anmeldung: 09.07.2014
(73) Patentinhaber: Himbis, Domna, 46119 Oberhausen (DE)
(72) Erfinder: Himbis, Domna, 46119 Oberhausen (DE); Himbis, Spiridon, 46119 Oberhausen (DE)
(74) Vertreter: Patent- und Rechtsanwälte Ullrich & Naumann

(56) Entgegenhaltungen:
- EP-A2- 0 287 910
- DE-A1-102007 011 077
- GB-A- 2 093 338
- US-A- 4 715 271
- US-A- 5 605 710
- US-A- 5 842 408

## Beschreibung

Die Erfindung betrifft eine Vorrichtung zur Zubereitung eines Aufgussgetränks, insbesondere von Kaffee, Tee, Kakao oder Brühe bzw. Suppe, mit einem Behältnis zum zumindest teilweisen Auflegen auf den Rand eines Trinkgefäßes und einem von dem Behältnis eingeschlossenen Raum zur Aufnahme eines zu filternden Stoffs, wobei zumindest ein den Raum begrenzender Bodenbereich im Sinne eines Filters ausgebildet ist, wobei das Behältnis zur Lagerung bzw. Aufbewahrung oder zum Transport, d.h. vor Gebrauch, im geschlossenen Zustand zusammengefaltet ist und zum Gebrauch durch Öffnen, Auffalten, Entfalten, Auseinanderziehen o. ä. der Raum vergrößert wird, so dass der Stoff zum Aufgießen zugänglich ist.

Die Erfindung betrifft ganz allgemein die Zubereitung eines Aufgussgetränks jedweder Art und dabei die dazu erforderliche Vorrichtung. Dabei kann es sich beispielsweise um Kaffee, Tee, Kakao oder Suppen sowie andere aufzugießende Getränke und Lebensmittel handeln. Denkbar sind auch weitere Anwendungen wie bspw. das Aufgießen einer Inhalation, bspw. als Heilmittel gegen Erkrankungen der Atemwege.

Die Zubereitung von Aufgussgetränken erfordert die Nutzung diverser, meist bestimmter Geräte oder Küchenutensilien, wie bspw. einer Kaffemaschine, eines Filters, eines Topfs etc. sowie die Bereitstellung des aufzubrühenden Stoffs. Außerdem müssen die Geräte und Utensilien nach Gebrauch gereinigt werden. Dadurch lassen sich Aufgussgetränke nur mühsam unterwegs, d.h. unabhängig von bestimmten Geräten und Küchenutensilien, bspw. auf Reisen oder bei der Arbeit, zubereiten. Das Mitführen relativ schwerer, sperriger Geräte und Utensilien gilt es zu vermeiden.

Die erforderlichen technischen Maßnahmen müssen sich daher auf die Verringerung des Volumens und des Gewichts einer Vorrichtung zur Zubereitung eines Aufgussgetränks sowie auf die Praktikabilität des Aufgießens eines Aufgussgetränks für unterwegs beziehen.

Aus der DE 1 579 410 ist bereits das hier zugrunde liegende Problem erkannt und wird auch eine Lösung geliefert. DE 1 579 410 zeigt eine Vorrichtung für die Zubereitung eines Getränks, insbesondere von Kaffee, wobei die Vorrichtung als Einwegartikel ausgebildet ist. Sie umfasst ein Gehäuse mit zwei Flügeln zum Auflegen auf den Rand eines Trinkgefäßes sowie ein hohles Teil mit gemahlenem Kaffee. Problematisch ist auch hier, dass sich die Vorrichtung nicht zum Mitführen für unterwegs eignet, nämlich ein recht großes Volumen hat.

Die US 5 506 710 zeigt eine Brühvorrichtung für Kaffee, die keilartig auseinandergeklappt wird, mit einem Kaffeefilter und zwei seitlich angeordneten, flügelartigen Trägern, die auf den Rand eines Trinkgefäßes aufsetzbar sind.

Die GB 2 093 338 A zeigt eine Vorrichtung zur Zubereitung von Kaffee mit einer Filteranordnung, die eine rechteckige Stützplatte mit einer mittigen Öffnung zum Eingießen von heißem Wasser und zwei Stützbeinen an den distalen Enden der rechteckigen Stützplatte aufweist. Die rechteckige Stützplatte wird seitlich neben der mittigen Öffnung an dafür vorgesehenen Linien geknickt und an den geknickten distalen Enden der Stützplatte auf dem Trinkgefäß abgestellt.

Die US 4 715 271 zeigt eine Vorrichtung zur Zubereitung eines Aufgussgetränks bestehend aus zwei langen Seiten, die durch Aufklappen einer seitlichen M-Faltung auseinanderziehbar ist.

Die DE 10 2007 011 077 A1 zeigt ein faltbares, zum Aufsetzen auf einen Rand eines Trinkgefäßes vorgesehenes Trägerelement für einen durch einen wasserdurchlässigen Filterbogen gebildetes, zum Aufnehmen eines zu extrahierenden Stoffes vorgesehenes Tütenelement.

Die US 5 842 408 zeigt eine Vorrichtung zum Aufbrühen von Kaffee, wobei die Vorrichtung im Wesentlichen aus zwei vertikal angeordneten Pappelementen besteht und durch Auseinanderziehen aufklappbar ist.

Die EP 0 278 910 A2 offenbart eine Vorrichtung gemäß dem Oberbegriff des Anspruchs 1 und zeigt einen Filter, insbesondere Kaffeefilter, mit einer auf dem Rand einer Tasse oder dergleichen aufsetzbaren, aufrechte oder annähernd aufrechte Wandungen aufweisenden Halterahmen und einen innerhalb desselben befestigten Beutel aus Filtermaterial. Die gesamte Vorrichtung wird auf dem Rand einer Tasse positioniert und lässt sich dreiecksartig durch eine vertikale M-Faltung an einem der beiden distalen Enden aufklappen.

Der vorliegenden Erfindung liegt daher die Aufgabe zugrunde, eine alternative Ausgestaltung der gattungsbildende Vorrichtung zum Aufgießen eines Aufgussgetränks anzubieten, wobei bei einfachster Konstruktion das Lagern und Mitführen der Vorrichtung sowie ein einfacher und schneller Gebrauch ermöglicht und das Behältnis in idealer Weise an das Trinkgefäß anpassbar ist.

Voranstehende Aufgabe ist durch die Merkmale des Patentanspruchs 1 gelöst. Danach ist die gattungsbildende Vorrichtung dadurch gekennzeichnet, dass das Behältnis derart in Form eines Faltschiffchens ausgebildet ist, dass durch seitliches Auseinanderziehen das gesamte Behältnis an den Durchmesser des Trinkgefäßes (2) anpassbar ist, wobei an den Seiten des Behältnisses Laschen zum Greifen und Auseinanderziehen angebracht sind.

Es ist zunächst erkannt worden, dass es zum Aufgießen eines Aufgussgetränks nicht notwendig ist, eine von vorne herein nach oben offene und formfeste Vorrichtung zu verwenden. Ganz im Gegenteil ist erkannt worden, dass es Sinn macht, eine Vorrichtung zur Zubereitung von Aufgussgetränken derart auszugestalten, dass sie vor Gebrauch zusammengefaltet ist und dadurch eine äußerst geringe Tiefe und somit einen kleinen Stauraum aufweist. Um den aufzugießenden Stoff für das aufgießende Wasser zugänglich zu machen, wird die Vorrichtung für den Gebrauch aufgefaltet, entfaltet oder auseinandergezogen. Dadurch eignet sich die Vorrichtung in idealer Weise zum Mitführen für unterwegs, bspw. auf Reisen oder bei der Arbeit. Die Vorrichtung kann problemlos in bspw. der Handtasche, der Aktentasche oder der Brusttasche eines Hemdes aufbewahrt und transportiert werden. Durch Falttechnik wird weiterhin sichergestellt, dass Aromen geschützt werden und kein Stoff bei der Aufbewahrung oder dem Transport aus der Vorrichtung gelangt und die Umgebung der Vorrichtung verschmutzt wird. Das durch das Auffalten bzw. Auseinanderziehen der Vorrichtung entstehende Volumen des den aufzugießenden Stoff aufnehmenden Raums bietet weiter den Vorteil, dass sich die Aromen in idealer Weise beim Aufgießen von Wasser entfalten können. Dabei kann je nach Art des Aufgussgetränks heißes oder kaltes Wasser verwendet werden. Andere Flüssigkeiten wie bspw. Milch sind auch denkbar. Des Weiteren unterstützt das Auffalten bzw. Auseinanderziehen der Vorrichtung eine ideale Anpassung an das Trinkgefäß. Die Vorrichtung kann nämlich weitestgehend unabhängig vom Durchmesser des Trinkgefäßes auf dessen Rand aufgesetzt werden. Durch eine flexible Anpassung der Vorrichtung an das Trinkgefäß wird eine sichere Positionierung der Vorrichtung unterstützt. Die Öffnung des Trinkgefäßes kann bereichsweise oder für ein intensiveres Ziehen der Aromen vollständig von der Vorrichtung abgedeckt werden.

In vorteilhafter Weise umfasst das Behältnis ein zur Stabilisierung dienendes Außenteil und ein als Filter dienendes Innenteil, wobei der den aufzugießenden Stoff aufnehmende Raum im Wesentlichen durch das Innenteil gebildet ist.

Des Weiteren ist es denkbar, dass das Innenteil als trichter-, kasten-, säckchen- oder beutelförmiger Filter ausgebildet ist und durch Auffalten, Entfalten oder Auseinanderziehen des Behältnisses geöffnet oder vergrößert wird, was die Entfaltung des Aromas beim Aufgießen abermals begünstigt. Ragt das Innenteil nach unten in das Trinkgefäß bzw. in die in dem Trinkgefäß befindliche Flüssigkeit, kann das Lösen des Stoffs weiter unterstützt werden.

Von besonderem Vorteil ist es, wenn das Außenteil des Behältnisses derart geformt bzw. profiliert ist, dass sich die Vorrichtung sicher auf den Rand von Trinkgefäßen, zumindest in Standardgröße, positionieren lässt. Dabei kann das Außenteil an dessen unterer Seite bspw. eine Ausnehmung oder Ausnehmungen aufweisen, die den Rand des Trinkgefäßes bereichsweise umgreift/umgreifen. Auch denkbar ist eine Rutschsicherung in diesem Bereich bspw. in Form von Noppen, Rillen oder dgl.

Erfindungsgemäß ist erkannt worden, dass es von besonderem Vorteil ist, wenn das Behältnis in Form eines Faltschiffchens ausgebildet ist. Dadurch lässt sich das Behältnis in idealer Weise zum Eingießen von Flüssigkeit und Aufgießen eines Stoffs auffalten, auseinanderziehen und damit öffnen, der Innenraum entfalten und das gesamte Behältnis an den Durchmesser des Trinkgefäßes anpassen. Außerdem begünstigt die Form eines Faltschiffchens das Aufbewahren, Lagern und Mitführen der Vorrichtung aufgrund seiner äußerst flachen Gestalt und seines geringen Volumens im zusammengelegten bzw. gefalteten Zustand vor dem Gebrauch. Um das Auseinanderziehen des Behältnisses zu vereinfachen sind in weiter erfindungsgemäßer Weise an den Seiten Laschen angebracht, an denen man das Behältnis greifen und auseinander ziehen kann.

Des Weiteren ist es denkbar, dass der Raum bereits eine Vorportionierung des aufzugießenden Stoffs enthält oder der aufzugießende Stoff vom Nutzer individuell, bspw. in Form von Pulver, eines Pads, einer Kapsel, eines Beutels o.ä., in die Vorrichtung eingelegt wird. Bei individueller Portionierung des aufzugießenden Stoffs durch den Nutzer könnte die Vorrichtung mehrfach benutzt werden, d.h. nach Gebrauch wieder zusammengefaltet und aufbewahrt werden. Hier bietet sich die Ausgestaltung aus Kunststoff an.

In vorteilhafter Weise ist das Behältnis zur Entsorgung wieder zusammenfaltbar und/oder schließbar, umfasst zumindest aber einen, bspw. ober- oder unterseitigen, Tropfschutz. Dies begünstigt weiterhin die Verwendung der Vorrichtung unterwegs, da die Vorrichtung nach Gebrauch nicht tropft oder den aufgebrühten Stoff verliert und sauber entsorgt werden kann.

Der Filter der Vorrichtung kann zumindest teilweise aus permeablem, den aufzubrühenden Stoff zurückhaltendem Material ausgebildet sein. Denkbar sind jegliche Natur- und/oder Kunstfasern, bspw. Papier, Zellstofffließ o.ä.

Des Weiteren können die unterschiedlichen Bereiche der Vorrichtung aus demselben oder unterschiedlichen Materialen hergestellt sein. Besonders eignet sich reißfestes, hitzebeständiges und geschmacksneutrales Material, wie bspw. Metall und Plastik. Ausgestaltungen aus Papier, Pappe und Karton sind als einfache Varianten von Vorteil.

Ist die Vorrichtung als Einwegprodukt ausgebildet, ist es von besonderem Vorteil, wenn die Vorrichtung zumindest Bereichsweise, idealerweise vollständig aus recyclebarem oder kompostierbarem Material ausgebildet ist.

Besonders vorteilhaft ist es, wenn die Vorrichtung zumindest bereichsweise mit einem der Kapillarwirkung entgegenwirkenden Material überzogen ist. Dabei kann es sich bspw. um einen Wachsfilm handeln. Ein solcher Überzug eignet sich ganz besonders in Bereichen, die mit Wasser in Berührung kommen, wie bspw. dem Innenteil und der Auflagefläche des Außenteils der Vorrichtung. Durch die Verwendung eines solchen Überzugs kann zudem weniger reisfestes, hitze- und wasserbeständiges, aber dafür leichteres und recycle- oder kompostierbares Material verwendet werden, wie bspw. Papier, Pappe oder Karton.

Des Weiteren ist es denkbar, dass die einzelnen Bereiche der Vorrichtung, d.h. Außenteil, dessen Auflagefläche oder -punkte, Innenteil, Filter etc., durch Kleben, Schweißen, Falten und/oder Verpressen miteinander verbunden sind.

Um die Aromen des aufzugießenden Stoffs zu schützen, ein unbeabsichtigtes Austreten des Stoffs zu vermeiden und gewisse Anforderungen an die Hygiene auch nach der Aufbewahrung und dem Transport der Vorrichtung in Taschen etc. zu erfüllen, ist es von weiterem Vorteil, wenn ein Frischhalte- und/oder Aromaschutz die Vorrichtung zumindest bereichsweise luft- und/oder wasserdicht versiegelt. Dabei sollte zumindest der den aufzubrühenden Stoff aufnehmende Raum versiegelt sein. Der vorzugsweise aus Papier, Plastik, Metallfolie o.ä. hergestellte Schutz kann geklebt, verschweißt und/oder gefaltet sein und lässt sich in idealer Weise auffalten oder aufreißen.

Dabei ist es vorteilhaft, wenn der Aromaschutz als Umverpackung die gesamte Vorrichtung einzeln oder im Los, d.h. mehrere Vorrichtungen auf einmal, umschließt. Alternativ kann der Aromaschutz als Teil der Vorrichtung ausgebildet sein und vor Gebrauch von dieser entfernt oder lediglich geöffnet werden.

Der Frischhalte- und/oder Aromaschutz bzw. die Umverpackung können nach Gebrauch der Vorrichtung zur Entsorgung dienen, indem die gebrauchte Vorrichtung wieder in seine Umverpackung hineingelegt wird. Dadurch kann eine saubere Entsorgung ohne Tropfen und Verschmutzung durch den aufgebrühten Stoff sichergestellt werden. Dabei ist es denkbar, dass die Umverpackung wieder verschließbar ist, bspw. durch einen Klebestreifen oder dgl.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im

Allgemeinen bevorzugte Ausgestaltungen und Weiterbildungen der Lehre erläutert. In der Zeichnung zeigen
- Fig. 1: in einer schematischen Ansicht ein Ausführungsbeispiel einer erfindungsgemäßen Vorrichtung in Form eines Faltschiffchens und
- Fig. 2: in einer schematischen Ansicht den Gegenstand aus Fig. 1 auf einem Trinkgefäß aufsitzend.

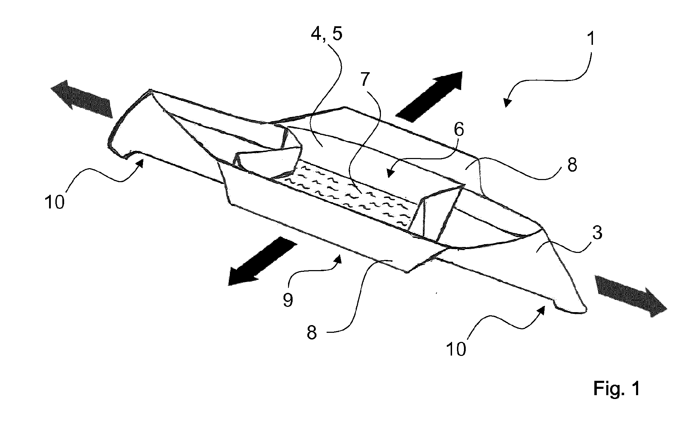

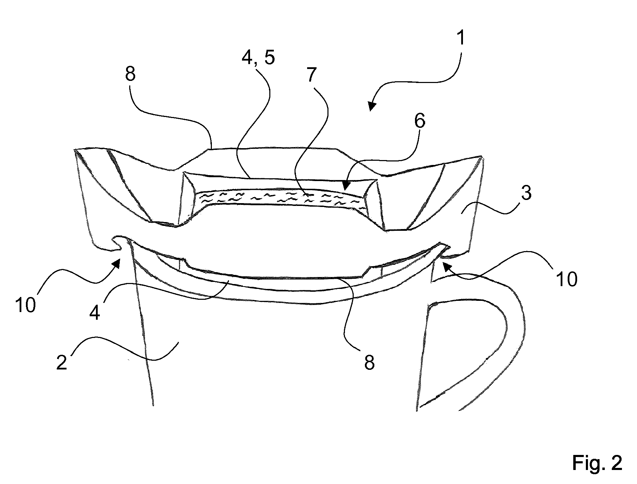

Die Fig. 1 und 2 zeigen in schematischer Ansicht ein Ausführungsbeispiel einer erfindungsgemäßen Vorrichtung zur Zubereitung eines Aufgussgetränks. Wesentlicher Bestandteil der Vorrichtung ist ein Behältnis 1 in Form eines Faltschiffchens.

Das Behältnis 1 umfasst ein zur Stabilisierung und zum Auflegen auf ein in Fig. 2 gezeigtes Trinkgefäß 2 dienendes Außenteil 3 und ein als Filter 4 dienendes Innenteil 5. Dem Innenteil 5 ist ein Raum 6 mit aufzugießendem Stoff 7 zugeordnet. Der Raum 6 bzw. das Innenteil 5 ist im zusammengefalteten Zustand des Behältnisses 1 ebenfalls gefaltet. Vor Gebrauch, d.h. zur Aufbewahrung und zum Transport der Vorrichtung, ist das Behältnis 1 relativ flach zusammengelegt. Für den Gebrauch wird das Behältnis 1 seitlich auseinander gezogen und dadurch nach oben geöffnet. Um das Auseinanderziehen des Behältnisses zu vereinfachen sind an den Seiten Laschen 8 angebracht, an denen man das Behältnis 1 greifen und auseinander ziehen kann. Beim Öffnen bzw. Auseinanderziehen des Behältnisses 1 wird der mit aufzugießendem Stoff 7 befüllte Raum 6 entfaltet und nach oben geöffnet, so dass Wasser von oben in den Raum 6 hineingegossen werden kann.

Das Innenteil 5 umfasst des Weiteren einen den Raum 6 begrenzenden Bodenbereich 9, der als kastenförmiger Filter 4 ausgebildet ist. Nach Hineingießen von Wasser in den Raum 6 läuft das Aufgussgetränk durch den Filter 4 in das Trinkgefäß 2.

Das Außenteil 3 ist derart ausgeformt, dass es sich im auseinandergezogenen Zustand des Behältnisses 1 auf dem Rand des in Fig. 2 gezeigten Trinkgefäßes 2 positionieren lässt. Dazu weist es jeweils eine Aussparung 10 an der Unterseite der distalen Enden des Behältnisses 1 auf, die den Rand des Trinkgefäßes 2 umgreifen.

Das Behältnis 1 ist aus mit Wachs überzogener Pappe, der Bodenbereich des Raums bzw. der Filter aus Zellstoff hergestellt. Es handelt sich um ein Einwegprodukt.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, diese jedoch nicht auf das Ausführungsbeispiel einschränkt.

### Bezugszeichenliste

- 1: Behältnis
- 2: Trinkgefäß
- 3: Außenteil des Behältnisses
- 4: Filter
- 5: Innenteil des Behältnisses
- 6: Raum
- 7: Aufzugießender Stoff
- 8: Laschen
- 9: Bodenbereich
- 10: Aussparung des Außenteils

## Patentansprüche

1. Vorrichtung zur Zubereitung eines Aufgussgetränks, insbesondere von Kaffee, Tee, Kakao oder Brühe bzw. Suppe, mit einem Behältnis (1) zum zumindest teilweisen Auflegen auf den Rand eines Trinkgefäßes (2) und einem von dem Behältnis (1) eingeschlossenen Raum (6) zur Aufnahme eines zu filternden Stoffs (7), wobei zumindest ein den Raum (6) begrenzender Bodenbereich im Sinne eines Filters (4) ausgebildet ist, wobei das Behältnis (1) zur Lagerung bzw. Aufbewahrung oder zum Transport, d.h. vor Gebrauch, im geschlossenen Zustand zusammengefaltet ist und zum Gebrauch durch Öffnen, Auffalten, Entfalten, Auseinanderziehen o. ä. der Raum (6) vergrößert wird, so dass der Stoff (7) zum Aufgießen zugänglich ist,
wobei das Behältnis (1) derart in Form eines Faltschiffchens ausgebildet ist, dass durch seitliches Auseinanderziehen das gesamte Behältnis (1) an den Durchmesser des Trinkgefäßes (2) anpassbar ist, **dadurch gekennzeichnet, dass** an den Seiten des Behältnisses (1) Laschen (8) zum Greifen und Auseinanderziehen angebracht sind.

2. Vorrichtung nach Anspruch 1, **dadurch gekennzeichnet, dass** das Behältnis (1) ein zur Stabilisierung dienendes Außenteil (3) und ein als Filter (4) dienendes Innenteil (5) umfasst, wobei der Raum (6) im Wesentlichen dem Innenteil (5) zugeordnet ist.

3. Vorrichtung nach einem der Ansprüche 1 oder 2, **dadurch gekennzeichnet, dass** das Innenteil (5) als trichter-, kasten-, säckchen- oder beutelförmiger Filter (4) ausgebildet ist und durch Auffalten, Entfalten oder Auseinanderziehen des Behältnisses (1) ebenfalls entfaltet wird und/oder nach unten ragt.

4. Vorrichtung nach Anspruch 1 oder 2, **dadurch gekennzeichnet, dass** das Außenteil (3) des Behältnisses (1) an dessen unterer Seite eine Ausnehmung oder Ausnehmungen und/oder eine Rutschsicherung aufweist, so dass sich die Vorrichtung sicher auf den Rand von Trinkgefäßen (2) positionieren lässt.

5. Vorrichtung nach einem der Ansprüche 1 bis 4, **dadurch gekennzeichnet, dass** der Raum (6) bereits eine Vorproportionierung des aufzugießenden Stoffs (7) enthält oder der aufzugießende Stoff (7) vom Nutzer individuell, bspw. in Form von Pulver, eines Pads, einer Kapsel, eines Beutels o.ä., in die Vorrichtung eingelegt wird.

6. Vorrichtung nach einem der Ansprüche 1 bis 5, **dadurch gekennzeichnet, dass** das Behältnis (1) zur Entsorgung wieder zusammenfaltbar und/oder schließbar ist, zumindest aber einen, bspw. ober- oder unterseitigen, Tropfschutz umfasst.

7. Vorrichtung nach einem der Ansprüche 1 bis 6, **dadurch gekennzeichnet, dass** der Filter (4) zumindest teilweise aus permeablem, den aufzubrühenden Stoff (7) zurückhaltenden Material, bspw. aus Natur- und/oder Kunstfasern, ausgebildet ist.

8. Vorrichtung nach einem der Ansprüche 1 bis 7, **dadurch gekennzeichnet, dass** die unterschiedlichen Bereiche des Behältnisses (1) aus demselben oder unterschiedlichen, zumindest teilweise aus reißfesten, hitzebeständigen und/oder geschmacksneutralen Materialen, bspw. aus Papier, Pappe, Karton, Metall und/oder Plastik, ausgebildet sind.

9. Vorrichtung nach einem der Ansprüche 1 bis 8, **dadurch gekennzeichnet, dass** das Behältnis (1) zumindest Bereichsweise aus kompostierbarem Material ausgebildet ist.

10. Vorrichtung nach einem der Ansprüche 1 bis 9, **dadurch gekennzeichnet, dass** das Behältnis (1) zumindest bereichsweise mit einem der Kapillarwirkung entgegenwirkenden Material, insbesondere einem Wachsfilm, überzogen ist.

11. Vorrichtung nach einem der Ansprüche 1 bis 10, **dadurch gekennzeichnet, dass** die einzelnen Bereiche der Vorrichtung durch Kleben, Schweißen und/oder Falten miteinander verbunden sind.

12. Vorrichtung nach einem der Ansprüche 1 bis 11, **dadurch gekennzeichnet, dass** ein geklebter, verschweißter und/oder gefalteter Frischhalte- und/oder Aromaschutz aus Papier, Plastik, Metallfolie o.ä., die Vorrichtung zumindest bereichsweise versiegelt und auffaltbar oder aufreißbar ist.

13. Vorrichtung nach Anspruch 12, **dadurch gekennzeichnet, dass** der Aromaschutz als Umverpackung die gesamte Vorrichtung einzeln oder im Los umschließt oder als Teil der Vorrichtung ausgebildet ist.

## Claims

1. Device for preparing an infusion drink, in particular of coffee, tea, cocoa or broth or soup, having a container (1) for at least partially placing on the edge of a drinking vessel (2) and a space (6) which is enclosed by the container (1) for receiving a substance (7) to be filtered, wherein at least one base region which delimits the space (6) is constructed in the manner of a filter (4), wherein the container (1) is folded together in the closed state for storage or safekeeping or for transport, that is to say, before use, and the space (6) is enlarged for use by opening, folding open, unfolding, pulling apart, or the like, so that the substance (7) is accessible for infusion,
wherein the container (1) is constructed in the form of a folded paper ship so that, as a result of being laterally pulled apart, the entire container (1) can be adapted to the diameter of the drinking vessel (2), **characterised in that** flaps (8) for gripping and pulling apart are fitted to the sides of the container (1).

2. Device according to claim 1, **characterised in that** the container (1) comprises an outer portion (3) which is used for stabilisation and an inner portion (5) which acts as a filter (4), wherein the space (6) is substantially associated with the inner portion (5).

3. Device according to either claim 1 or claim 2, **characterised in that** the inner portion (5) is constructed as a funnel-like, box-like, bag-like or pouch-like filter (4) and by folding open, unfolding or pulling apart of the container (1) is also unfolded and/or protrudes downwards.

4. Device according to claim 1 or claim 2, **characterised in that** the outer portion (3) of the container (1) has at the lower side thereof a recess or recesses and/or a sliding prevention member so that the device can be safely positioned on the edge of drinking vessels (2).

5. Device according to any one of claims 1 to 4, **characterised in that** the space (6) already contains a pre-portioning of the substance (7) to be infused or the substance (7) to be infused is placed into the device by the user individually, for example, in the form of powder, a pad, a capsule, a pouch or the like.

6. Device according to any one of claims 1 to 5, **characterised in that** the container (1) can be folded together and/or closed again for disposal, but comprises at least one, for example, upper-side or lower-side drip prevention arrangement.

7. Device according to any one of claims 1 to 6, **characterised in that** the filter (4) is constructed at least partially from permeable material which retains the substance to be brewed and which is, for example, of natural or synthetic fibres.

8. Device according to any one of claims 1 to 7, **characterised in that** the different regions of the container (1) are constructed from the same or different materials, at least partially from tear-resistant, heat-resistant and/or neutral-tasting materials, for example, of paper, card, cardboard, metal and/or plastics material.

9. Device according to any one of claims 1 to 8, **characterised in that** the container (1) is constructed at least partially from compostable material.

10. Device according to any one of claims 1 to 9, **characterised in that** the container (1) is covered at least partially with a material which counteracts the capillary action, in particular a wax film.

11. Device according to any one of claims 1 to 10, **characterised in that** the individual regions of the device are connected to each other by means of adhesive bonding, welding and/or folding.

12. Device according to any one of claims 1 to 11, **characterised in that** an adhesively-bonded, welded and/or folded airtight protection and/or aroma protection of paper, plastics material, metal film or the like at least partially seals the device and can be folded open or torn open.

13. Device according to claim 12, **characterised in that** the aroma protection as an outer packaging surrounds the entire device individually or in batches or is constructed as part of the device.

## Revendications

1. Dispositif pour la préparation d'une infusion, en particulier de café, de thé, de cacao ou d'un bouillon ou d'une soupe, comportant un récipient (1) destiné à être au moins partiellement mis en place sur le bord d'un récipient à boire (2), et un espace (6), enfermé par le récipient (1), destiné à recevoir une substance (7) à filtrer, dans lequel au moins une zone de fond, délimitant l'espace (6), est réalisée dans le sens d'un filtre (4), le récipient (1) étant replié à l'état fermé pour le stockage ou la conservation, ou pour le transport, par exemple avant utilisation, et s'agrandissant pour une utilisation grâce à une ouverture, un dépliage, un déploiement, un étirage ou analogues de l'espace (6), de telle sorte que la substance (7) soit accessible à l'opération d'infusion, dans lequel le récipient (1) est conçu sous forme d'une nacelle repliée, de telle sorte que, grâce à un étirage latéral, il soit possible d'adapter la totalité du récipient (1) au diamètre du récipient à boire (2), **caractérisé en ce que** des pattes (8) sont rapportées aux côtés du récipient (1), pour préhension et étirage.

2. Dispositif selon la revendication 1, **caractérisé en ce que** le récipient (1) comprend une pièce extérieure (3) servant à la stabilisation et une pièce intérieure (5) servant de filtre (4), l'espace (6) étant pour l'essentiel affecté à la pièce intérieure (5).

3. Dispositif selon l'une des revendications 1 ou 2, **caractérisé en ce que** la pièce intérieure (5) est conçue comme un filtre (4) en forme d'entonnoir, de caisson, de sac ou de sachet, et elle aussi est déployée par dépliage, déploiement ou étirage du récipient (1), et/ou dépasse vers le bas.

4. Dispositif selon la revendication 1 ou 2, **caractérisé en ce que** la pièce extérieure (3) du récipient (1) comprend sur sa face inférieure un évidement ou des évidements et/ou une protection antidérapante, de telle sorte que le dispositif puisse être positionné d'une manière sûre sur le bord de récipients à boire (2).

5. Dispositif selon l'une des revendications 1 à 4, **caractérisé en ce que** l'espace (6) contient déjà un pré-portionnage de la substance (7) à infuser, ou la substance (7) à infuser est introduite dans le dispositif par l'utilisateur à titre individuel, par exemple sous forme d'une poudre, d'une pastille, d'une capsule, d'un sachet ou analogues.

6. Dispositif selon l'une des revendications 1 à 5, **caractérisé en ce que** le récipient (1) peut, pour être éliminé, être de nouveau replié et/ou fermé, mais comprend au moins une protection anti-gouttes, par exemple côté supérieur ou côté inférieur.

7. Dispositif selon l'une des revendications 1 à 6, **caractérisé en ce que** le filtre (4) est au moins partiellement conçu en un matériau perméable, retenant la substance (7) à infuser, par exemple des fibres naturelles et/ou des fibres artificielles.

8. Dispositif selon l'une des revendications 1 à 7, **caractérisé en ce que** les différentes zones du récipient (1) sont fabriquées en un même matériau, ou en des matériaux différents, au moins partiellement en un matériau résistant à la déchirure, résistant à la chaleur et/ou ayant un goût neutre, par exemple le papier, le carton, le carton épais, un métal et/ou un plastique.

9. Dispositif selon l'une des revendications 1 à 8, **caractérisé en ce que** le récipient (1) est conçu au moins par zones en un matériau compostable.

10. Dispositif selon l'une des revendications 1 à 9, **caractérisé en ce que** le récipient (1) est au moins par zones revêtu d'un matériau allant à l'encontre d'un effet de capillarité, en particulier un film de cire.

11. Dispositif selon l'une des revendications 1 à 10, **caractérisé en ce que** les différentes zones du dispositif sont assemblées les unes aux autres par collage, soudage et/ou pliage.

12. Dispositif selon l'une des revendications 1 à 11, **caractérisé en ce qu'**une protection, assurant le maintien de la fraîcheur et/ou l'arôme, collée, soudée et/ou pliée, en papier, en plastique, en une feuille métallique ou analogues, scelle le dispositif au moins par zones, et est dépliable ou peut être ouverte par déchirement.

13. Dispositif selon la revendication 12, **caractérisé en ce que** la protection de l'arôme, en tant que suremballage, entoure la totalité du dispositif, à titre individuel ou par lots, ou est conçue comme une partie du dispositif.
